# EUROPÄISCHE PATENTSCHRIFT

(11) **EP 2 477 800 B1**
(45) Veröffentlichungstag und Bekanntmachung des Hinweises auf die Patenterteilung: **17.08.2016**
(21) Anmeldenummer: 10751666.8
(22) Anmeldetag: 07.09.2010
(51) Int. Cl.: B29C 70/38, B29C 70/54, B29C 31/00, B29C 33/76

(54) **VERFAHREN ZUR VERSTEIFUNG EINES FASERVERBUNDBAUTEILS UND ANORDNUNG ZUR HERSTELLUNG EINES VERSTEIFTEN FASERVERBUNDBAUTEILS**
METHOD FOR REINFORCING A FIBER COMPOSITE COMPONENT AND ARRANGEMENT FOR PRODUCING A REINFORCED FIBER COMPOSITE COMPONENT
PROCÉDÉ POUR RAIDIR DES ÉLÉMENTS EN COMPOSITE RENFORCÉ DE FIBRES, ET DISPOSITIF DE FABRICATION D'UN ÉLÉMENT EN COMPOSITE RENFORCÉ DE FIBRES RAIDI

(30) Priorität: 18.09.2009 DE 102009029575; 18.09.2009 US 243682 P
(43) Veröffentlichungstag der Anmeldung: 25.07.2012
(73) Patentinhaber: Airbus Operations GmbH, 21129 Hamburg (DE)
(72) Erfinder: REINHARDT, Milan, 23909 Ratzeburg (DE); DORAWA, Tobias, 22605 Hamburg (DE); BAISCH, Philipp, 21680 Stade (DE); JACOB, Torben, 21643 Beckdorf (DE); BARLAG, Carsten, 26441 Jever (DE)
(74) Vertreter: Isarpatent
(86) Internationale Anmeldenummer: PCT/EP2010/063122
(87) Internationale Veröffentlichungsnummer: WO 2011/032865

(56) Entgegenhaltungen:
- WO-A1-2008/003721
- WO-A2-2010/125001
- DE-A1-102007 061 431

## Beschreibung

Die vorliegende Erfindung bezieht sich auf ein Verfahren zur Versteifung eines Faserverbundbauteils, insbesondere für die Luft- und Raumfahrt, und auf eine Anordnung zur Herstellung eines derartigen versteiften Faserverbundbauteils.

Obwohl auf beliebige Faserverbundbauteile anwendbar, werden die vorliegende Erfindung sowie die ihr zugrunde liegende Problematik nachfolgend mit Bezug auf flächige, stringerversteifte Kohlefaserkunststoff (CFK)-Bauteile (auch als Faserverbundbauteile bezeichnet), beispielsweise Hautschalen eines Flugzeugs, näher erläutert.

Es ist allgemein bekannt, CFK-Hautschalen mit CFK-Stringern zu versteifen, um den hohen Belastungen im Flugzeugbereich bei möglichst geringem zusätzlichen Gewicht standzuhalten. Dabei werden unterschiedliche Stringertypen verwendet, zum Beispiel T-, Ω- oder I-Stringer.

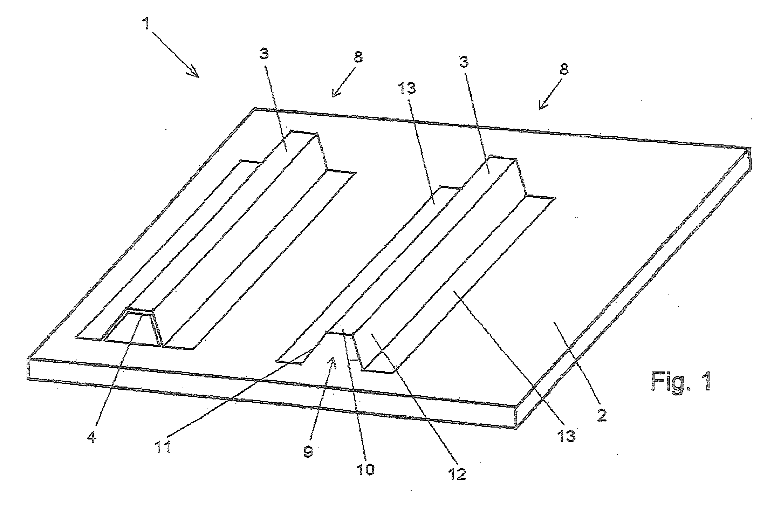

Im Folgenden sollen Stringer mit einem Hohlprofil betrachtet werden, wie z.B. Stringer mit einem Hutprofil, Ω-Stringer u.dgl. Der Begriff Hohlprofil bezieht sich auf ein Stringerprofil, welches mit Innenflächen zusammen mit einem Abschnitt eines zu versteifenden Faserverbundbauteils einen Hohlraum bzw. Innenraum bildet. Dabei wird im Weiteren dieser Innenraum als Aufnahmebereich bezeichnet. Dies soll an einer schematischen Perspektivansicht eines versteiften Faserverbundbauteils in Fig. 1 erläutert werden.

Auf einem Faserverbundbauteilabschnitt 2, beispielsweise eine Hautschale bzw. ein Hautlaminat eines Luftfahrzeugs, des versteiften Faserverbundbauteils 1 sind zwei Versteifungselemente 3 aufgebracht. Die Versteifungselemente 3 sind als Hohlprofil, in diesem Beispiel als Hutprofil bzw. Ω-Stringer, ausgeführt. Sie weisen jeweils zwei Fußabschnitte 13 auf, welche als Basis die Verbindungsfläche zur Hautschale bilden. Die Fußabschnitte 13 sind über Seitenwände 11 und 12, die hier in einem Winkel nach oben stehen, mit einer Deckwand 10 verbunden, wobei die Deckwand 10 im Wesentlichen parallel zu den Fußabschnitten 13 verläuft. Die Innenflächen von Deckwand 10, Seitenwand 11 und 12 sowie der darunter befindliche Abschnitt des Faserverbundbauteilabschnitt 2 umgrenzen den oben erwähnten Innenraum, der als Aufnahmebereich 9 bezeichnet ist. Die Bereiche der Anbringung der Versteifungselemente 3 sind hier jeweils als ein Formabschnitt 8 gekennzeichnet. Das linke Versteifungselement 3 ist hier nach erfolgtem Anbringen auf dem Faserverbundbauteilabschnitt 2 noch mit einem Druckelement 4 versehen, welches in den Aufnahmeabschnitt 9 eingebracht ist.

Bei der Herstellung derartiger Faserverbundbauteile aus Faserverbundkunststoffen ist es während des Aushärteprozesses erforderlich, den Verbund aus Fasern und Matrixwerkstoffen zu kompaktieren, um Lufteinschlüsse zu vermeiden und einen bestimmten Faservolumengehalt im ausgehärteten Hautlaminat erzielen zu können.

Unter Faserhalbzeugen sind Gewebe, Gelege und Fasermatten zu verstehen. Diese werden mit einer Matrix, beispielsweise einem Epoxidharz, versehen und anschließend beispielsweise in einem Autoklav ausgehärtet.

Durch die meist flächige Ausführung der Faserverbundbauteile 1 erfolgt diese Kompaktierung der mit Matrix getränkten Faserhalbzeuge bzw. Fasern während des Aushärteprozesses für gewöhnlich durch die Nutzung von Differenzdruck. Dazu wird ein Vakuumaufbau erstellt, der vorteilhafterweise durch eine Kunststofffolie realisiert wird, die an ihren Seiten hermetisch an die Form angebunden wird. Durch die Form und die Folie wird damit ein hermetisch abgeschlossener Raum gebildet, in den das Faserhalbzeug eingeschlossen ist. Durch Absaugung des Mediums innerhalb dieses hermetisch geschlossenen Raums wird ein relativer Überdruck außerhalb des Vakuumaufbaus erzielt, wodurch der Verbund aus Fasern und Matrix während der Aushärtung verpresst werden kann. Alternativ oder ergänzend kann durch eine Druckerhöhung außerhalb des Vakuumaufbaus die Kraft zur Kompaktierung des Faser-Harzverbundes verstärkt werden.

Die Herstellung von Faserverbundbauteilen erfordert während der Aushärtung einen gewissen Druck, um das Hautlaminat zu kompaktieren. Dieser Druck kann durch verschiedene Druckelemente auf das Bauteil aufgebracht bzw. übertragen werden. Ein solches Druckelement ist, wie schon oben erwähnt, mit dem Bezugszeichen 4 in Fig. 1 gezeigt. Dabei ist das Druckelement 4 außerdem insbesondere dazu erforderlich, Druck auf die von dem Versteifungselement 3 überdeckte Fläche des Hautlaminats zwischen den Fußabschnitten 13 des Versteifungselementes 3 auszuüben, um diesen Abschnitt zu kompaktieren.

Häufig ist eine genaue Positionierung und Fixierung der Druckelemente zum Halbzeug bzw. der Aushärtevorrichtung notwendig. Ggf. müssen Bauteilkomponenten zusammen mit den Druckelementen als eine Einheit aufgenommen, transportiert und positioniert werden, zum Beispiel mittels eines Greifers. Dazu ist eine Fixierung erforderlich, welche Bauteilkomponente und Druckelemente miteinander fixiert und spätestens am Ende des Herstellprozesses wieder gelöst werden kann. Dies betrifft alle Arten von Faserverbundherstellungsverfahren, insbesondere Prepreg- und Trockenfaserverfahren, sowie ähnliche Herstellungsmethoden, bei denen z.B. eine oder beide Bauteilkomponenten aus anderen Werkstoffen, z.B. einem Leichtmetall, bestehen können. Insbesondere bei Prozessen mit Hutprofilen muss der Innenraum bzw. Aufnahmebereich mit einem Druckelement ausgestattet werden, um Innenwände und besonders das Hautlaminat des Abschnitts des Faserverbundbauteils zu kompaktieren, welcher sich unterhalb des Aufnahmeabschnitts 9 (Fig. 1) befindet

Die Druckelemente werden bisher entweder separat vom mit Druck zu beaufschlagenden Bauteil aufgenommen, transportiert und anschließend zueinander positioniert. Oder es findet eine gemeinsame Integration von einem so genannten Subelement (Faserverbundprofil, Versteifungselement) und Druckelement im Vakuumaufbau statt, was jedoch nur bei sehr kleinen Bauteilen möglich ist, wenn Subelement und Druckelement z.B. stirnseitig zusammenklemmbar sind. Für große und sehr lange Bauteilkomponenten ist dies nur unter zusätzlichem und erheblichem Aufwand möglich. Die separate Integration der Druckelemente und Subelemente des Faserverbundbauteils während des Härteprozesses bringt Positionierungenauigkeiten und folglich Geometrieabweichungen des späteren Bauteils mit sich. Die Druckelemente laufen Gefahr, sich im Prozess zu verschieben. Sie können im ungünstigsten Fall im Bauteil eingeklemmt und mit einlaminiert werden.

Eine Positionierung und Befestigung der Druckelemente erfolgt deshalb bislang unter Nutzung der Schwerkraft und der Reibung und/oder durch Nutzung von ein- oder doppelseitigen Klebebändern, mit welchen diese innerhalb und/oder in/auf der Aushärtevorrichtung festgesetzt werden können. Diese Art führt zu dem Nachteil, dass diese Elemente z.T. nach der Aushärtung nicht mehr gelöst werden können, wobei die Druckelemente deshalb nach der Aushärtung im Bauteil verbleiben müssen, was zum Ausschuss des Bauteils führen kann.

Weiterhin sind folgende Verfahren bekannt:
1) In die Aushärtevorrichtung wird die erste Seite des späteren Faserverbundbauteils in Form des Faserhalbzeugs eingelegt. Auf dieser wird das Druckelement vor dem Aufsetzen des Hutelementes (Versteifungselement) positioniert. Nachteilig hierbei ist, dass sich das Druckelement während der Aushärtung verschieben und/oder zwischen den beiden Bauteilkomponenten eingeklemmt werden kann.
2) Das Druckelement wird in das Hutprofil eingelegt und während des Positionierens des Hutelementes manuell festgehalten. Dies ist jedoch nur möglich, wenn die Abmessungen des Bauteils klein sind. Bei größeren Bauteilen ist dies Verfahren nicht möglich, da hierzu viele Personen und koordiniertes Handeln erforderlich sind. Dabei kann das Druckelement aus dem Hutelement herausfallen, und somit ist das Risiko einer Beschädigung möglich. Ein weiteres Risiko besteht darin, dass das Druckelement zwischen dem Hautlaminat (erste Seite des späteren Faserverbundbauteils) und der zweiten Komponente (Versteifungselement) eingeklemmt wird.
3) Bei der Ausführung des Bauteils mit einer großen Länge und einem konstanten Innenquerschnitt ist ein Einziehen des Druckelementes nach dem Aufsetzen des Hutelementes auf das Hautlaminat möglich. Dies Verfahren kann jedoch nur angewandt werden, wenn die Längen des Bauteils bestimmte, vom Material des Druckelementes abhängige Längen nicht überschreiten. Das Hutelement muss dabei jedoch einen konstanten Innenquerschnitt über die gesamte Länge aufweisen.
4) Das Druckelement wird mit Klebebändern auf dem Hautlaminat befestigt. Bei größeren Längen des Hutelementes ist das Druckelement nicht mehr entformbar, da durch die Druckdifferenz die Verklebung zwischen Druckelement und Bauteil verstärkt wird.
5) Eine Befestigung mit einem Klebstoff kann nicht bei allen Arten von Druckelementen eingesetzt werden, da diese eine gegenüber dem Werkstoff der Matrix anti-adhäsive Oberfläche aufweisen müssen. Aufgrund dieser Oberflächen kommt es bei niedrig viskosen Klebstoffen zu einem Abperlen, welches den Auftrag von Klebstoff verhindert.
6) Bei der Herstellung von hohlen Bauteilen aus Faserverbundwerkstoffen mit vorimprägnierten Fasern im Co-Bondingverfahren kann eine Befestigung bzw. Fixierung des Druckelementes mit Hilfe eines Klebfilms formschlüssig erfolgen. Dazu wird das Druckelement in das ausgehärtete Bauteil (Versteifungselement) integriert und gegen Herausfallen durch einen durchgängigen Klebfilm gesichert. Dies kann jedoch nur bei Faserverbundbauteilen aus vorimprägnierten Fasern und einem bereits ausgehärteten Bauteil eingesetzt werden. Des Weiteren weist das ausgehärtete Bauteil durch den zusätzlichen Klebfilm ein höheres Gewicht auf.

Die DE 10 2007 061 431 A1 beschreibt ein Verfahren zur Versteifung eines Faserverbundbauteils, bei welchem ein Versteifungselement von einem Aufnahmeabschnitt einer Vakuummatte aufgenommen und auf einem zu versteifenden Faserverbundbauteil in abgedichteter Weise zum Bilden eines Formabschnitts aufgebracht wird. Die Vakuummatte kann auch Stringer mit Hohlprofil aufnehmen, jedoch sind dann auch Druckelemente erforderlich, da die Vakuummatte für Innenräume der Stringer nicht geeignet ist.

Die DE 10 2008 032 834 beschreibt ein Verfahren zur Positionierung eines schlauchförmigen Formkernes im Aufnahmebereich eines Versteifungselementes. An dem Versteifungselement sind Mittel zum form- und/oder reibschlüssigen Positionieren des Formkerns in dem Aufnahmebereich vorgesehen. Die Mittel zum Positionieren des Formkerns sind beispielsweise als clipförmige Hinterschnitte im Übergangsbereich zwischen den Fußabschnitten und den Seitenwänden des Versteifungselementes vorgesehen.

Die EP 2 159 039 beschreibt ein Verfahren zur Herstellung von Kompositstrukturen, wobei das Kompositmaterial zur Formgebung auf einem Formkörper platziert wird. Zur Positionierung des Kompositmaterials sind in dem Formkörper Magnete vorgesehen. Dadurch, dass das Kompositmaterial Fasern aus einem magnetischen Material aufweist ist der Kompositwerkstoff auf dem Formkörper exakt platzierbar und fixierbar.

Die WO 2010/125001 A2 offenbart ein Verfahren zur Herstellung eines Faserverbundbauteils für die Luft- und Raumfahrt, mit den Verfahrensschritten Ausbilden eines Formkerns nach einem der vorhergehenden Ansprüche aus einem Kork aufweisenden Material mit einem Kernwerkzeug zum Festlegen einer äußeren Geometrie des Formkerns, Anordnen des derart ausgebildeten Formkerns in Anlage an einem zumindest teilgehärteten Versteifungselement auf einem Basisbauteil des herzustellenden Faserverbundbauteils, wobei zumindest ein Fixierungselement für ein Fixieren des Formkerns an dem Versteifungselement vorgesehen wird, oder Anordnen des derart ausgebildeten Formkerns auf einem Basisbauteil des herzustellenden Faserverbundbauteils und wenigstens abschnittsweise Ablegen von wenigstens einem Faserhalbzeug auf dem ausgebildeten Formkern zur Formgebung von wenigstens einem Formabschnitt des herzustellenden Faserverbundbauteils, und mehrstufiges Beaufschlagen wenigstens des Formabschnitts mit Wärme und/oder Druck zum Herstellen des Faserverbundbauteils.

Vor diesem Hintergrund liegt der vorliegenden Erfindung die Aufgabe zugrunde, ein verbessertes Verfahren zur Versteifung eines Faserverbundbauteils und eine verbesserte Anordnung zur Herstellung eines versteiften Faserverbundbauteils bereitzustellen.

Erfindungsgemäß wird diese Aufgabe durch ein Verfahren mit den Merkmalen des Patentanspruchs 1 bzw. durch eine Anordnung mit den Merkmalen des Patentanspruchs 9 gelöst.

Demgemäß werden bei einem Verfahren zur Versteifung eines Faserverbundbauteils für die Luft- und Raumfahrt ein Versteifungselement mit einem Aufnahmebereich und ein an die Geometrie des Aufnahmebereichs angepasstes Druckelement bereitgestellt. Das Druckelement wird in den Aufnahmebereich des Versteifungselementes eingebracht. Dabei erfolgt ein reproduzierbares Fixieren des Versteifungselementes und des eingebrachten Druckelementes relativ zueinander mittels einer reversiblen Fixiereinrichtung. Die reversible Fixiereinrichtung weist mindestens einen an dem Druckelement angebrachten ersten Fixierabschnitt und mindestens einen an dem Versteifungselement anbringbaren zweiten Fixierabschnitt auf. Das Versteifungselement wird dann zusammen mit dem an ihm fixierten Druckelement auf dem zu versteifenden Faserverbundbauteil zum Bilden eines Formabschnitts reproduzierbar aufgebracht. Der so gebildete Formabschnitt wird zum Anbinden des Versteifungselementes an dem Faserverbundbauteil ausgehärtet. Dann erfolgt ein Entfernen der reversiblen Fixiereinrichtung und des Druckelementes von dem versteiften Faserverbundbauteil.

Weiterhin wird eine Anordnung zur Herstellung eines versteiften Faserverbundbauteils für die Luft- und Raumfahrt bereitgestellt. Die Anordnung weist Folgendes auf:
ein einen Aufnahmebereich aufweisendes Versteifungselement;
ein an die Geometrie des Aufnahmebereichs angepasstes Druckelement zum Einbringen des Druckelementes in den Aufnahmebereich;
eine reversible Fixiereinrichtung zum reproduzierbaren Fixieren des Versteifungselementes und des eingebrachten Druckelementes relativ zueinander, wobei die reversible Fixiereinrichtung mindestens einen an dem Druckelement angebrachten ersten Fixierabschnitt und mindestens einen an dem Versteifungselement anbringbaren zweiten Fixierabschnitt aufweist;
eine Transporteinrichtung, welche eine Trageinrichtung zur Aufnahme des Versteifungselementes und des im Aufnahmebereich des Versteifungselementes eingebrachten Druckelementes aufweist, zum reproduzierbaren Aufbringen des Versteifungselementes zusammen mit dem an ihm fixierten Druckelement auf dem zu versteifenden Faserverbundbauteil zum Bilden eines Formabschnitts;
eine Aushärteinrichtung zum Aushärten des gebildeten Formabschnitts zum Anbinden des Versteifungselementes an dem Faserverbundbauteil; und
eine Entfernungseinrichtung zum Entfernen der reversiblen Fixiereinrichtung und des Druckelementes von dem versteiften Faserverbundbauteil.

Die Transporteinrichtung ist für einen Transport zumindest des Versteifungselementes mit dem eingebrachten fixierten Druckelement in eine vorbestimmte Position relativ zu dem zu versteifenden Faserverbundbauteil vorgesehen. Zur Anordnung kann weiterhin zumindest eine Trageinrichtung zur Aufnahme mindestens eines Versteifungselementes und eines Druckelementes gehören. Die Aushärteeinrichtung kann eine Grundplatte aufweisen, welche zusammen mit der Transporteinrichtung zueinander korrespondierende Zentriermittel für eine reproduzierbare Positionierung des Versteifungselementes relativ zu dem zu versteifenden Faserverbundbauteil besitzen können.

Somit weist die vorliegende Erfindung gegenüber den eingangs genannten Ansätzen den Vorteil auf, dass eine reversible Fixierung von Versteifungselementen und Druckelementen, insbesondere bei großen und langen Bauteilen, unterschiedlicher Werkstoffe ermöglicht wird.

In den Unteransprüchen finden sich vorteilhafte Ausgestaltungen und Verbesserungen der vorliegenden Erfindung.

Eine Grundidee der Erfindung besteht darin, eine reversible Fixierung eines Versteifungselementes, insbesondere eines Hut- bzw. Hohlprofils, mit einem Druckelement im dreidimensionalen Raum relativ zueinander mittels einer reversiblen Fixiereinrichtung bereitzustellen.

Dabei bleibt die Fixierung von Versteifungselement und Druckelement bei Bewegung inklusive Rotation und Positionierung dieser Gesamtanordnung innerhalb oder auf der auszuhärtenden Bauteilkomponente bzw. der Aushärtevorrichtung bestehen und kann spätestens am Ende des Herstellungsprozesses wieder gelöst werden.

Es werden folgende Vorteile geschaffen:
- Prozesssichere Positionierung von Versteifungselement und Druckelement
- Gute Positioniergenauigkeit
- Umständliche Positionier- und Fixiereinheiten entfallen
- Eine Fixierung von Versteifungselement und Druckelement bei großen und langen Bauteilen wird ermöglicht, insbesondere, wenn die Druckelemente als Folienschlauch ausgeführt sind. Eine Fixierung des Druckelementes vom Rand her ist nicht erforderlich.
- Große Bauteillängen sind handhabbar, insbesondere maschinell.
- Die Fixierung ist reversibel.
- Die Fixierung ermöglicht die kombinierte Aufgabe der Fixierung des Druckelementes innerhalb des Versteifungselementes und gleichzeitig eine Fixierung des Systems Versteifungselement-Druckelement in der Aushärtevorrichtung und/oder Aufrüstvorrichtung.
- Das Verfahren ermöglicht die Fixierung des Druckelementes im Versteifungselement während des Handlingprozesses, ohne dass es durch diese Fixierung zu einer Steigerung der Kräfte während des Entformungsprozesses kommt.
- Eine mechanische Klemmung zur Fixierung des Druckelementes im Versteifungselement (Kontakt mit aktivierter Klebefläche wird vermieden) ist nicht notwendig.
- Es ergibt sich kein nachteiliges zusätzliches Gewicht, da alle Elemente nach der Aushärtung wieder entfernbar sind

Die reversible Fixiereinrichtung kann vor dem Aushärten des gebildeten Formabschnitts zumindest teilweise entfernt werden. Das ist vorteilhaft, weil dann ein außerhalb des Versteifungselementes angebrachtes Magnetelement bzw. aufgebrachter Fixierabschnitt für den Härteprozess aufzubringende Vakuumbauteile nicht beeinträchtigt.

Der zweite Fixierabschnitt der reversiblen Fixiereinrichtung ist in einer Ausführung an der Außenseite des Versteifungselementes angebracht, wobei das Versteifungselement dabei zwischen dem ersten Fixierabschnitt und dem zweiten Fixierabschnitt der reversiblen Fixiereinrichtung angeordnet ist.

Innerhalb des Druckelementes kann der jeweilige Fixierabschnitt zum Beispiel durch eine Verklebung an der Innenwand des Druckelementes erfolgen, ggf. bei der Herstellung des Druckelementes. In bestimmten Fällen ist es möglich, dass auch über die Schwerkraft bzw. die Geometrie des Druckelementes des jeweiligen Fixierabschnitts positioniert werden kann.

In einer alternativen Ausführung wird das reproduzierbare Fixieren des Versteifungselementes und des eingebrachten Druckelementes relativ zueinander mittels der Fixiereinrichtung mit einem reversiblen Klebelement vorgenommen, welches zwischen dem Druckelement und dem Versteifungselement angebracht wird. Beim Entfernen dieses reversiblen Klebelementes wird der am Versteifungselement haftende Klebstoff vollständig oder zumindest zum größten Teil entfernt. Es sind adhäsive und kohäsive Verklebungen möglich. Der Klebstoff kann auch flüssig, filmartig (z.B. doppelseitiges Klebband) oder fest (thermoplastischer Heißkleber) sein. Dabei besteht im Gegensatz zum Stand der Technik der Vorteil, dass der Klebstoff im Wesentlichen vollständig entfernbar ist.

Weiterhin kann der Klebstoff so ausgebildet sein, dass er durch Einwirkung von bestimmten Prozessparametern beim und/oder nach dem Aushärten seine Klebkraft verliert, oder dass seine Klebkraft so vermindert wird, dass ein vollständiges Entfernen möglich ist. Diese Prozessparameter können zum Beispiel bestimmte Temperaturen, Fluide bei bestimmten Temperaturen, bestimmte Chemikalien in Fluidform sein.

Es ist auch möglich, dass der Klebstoff durch gleichzeitiges Aufbringen einer Zugkraft auf das Druckelement und Applizieren eines bestimmten Fluids in einer definierten chemischen Zusammensetzung im Wesentlichen vollständig entfernbar ist.

Ebenso kann eine Beaufschlagung mit elektrostatischen Kräften zur Unterstützung der Entfernung des reversiblen Klebelementes mit Klebstoff von dem Versteifungselement erfolgen.

Ein Heißkleber kann so ausgebildet sein, dass er beim Abkühlen nach dem Härteprozess eine niedrige Topftemperatur aufweist, bei welcher ein Entfernen des Druckelementes leicht möglich ist.

In einer noch weiteren Alternative wird das reproduzierbare Fixieren des Versteifungselementes und des eingebrachten Druckelementes relativ zueinander mittels der Fixiereinrichtung mit einer Einrichtung zur Erzeugung und Aufbringung elektrostatischer Aufladung der Fixierabschnitte vorgenommen. Dazu sind die Fixierabschnitte aus einem elektrostatisch aufladbaren Werkstoff hergestellt. In besonders vorteilhafter Ausführung bilden das Versteifungselement und das Druckelement selbst die elektrostatisch aufladbaren Fixierabschnitte. Eine Aufladung kann zum Beispiel durch die Trageinrichtung nach erfolgtem Positionieren von Versteifungselement und Druckelement erfolgen. Die elektrostatischen Kräfte bilden dann die Fixierkraft, welche Versteifungselement und Druckelement zusammenhält.

Die Trageinrichtung kann den zweiten Fixierabschnitt in Form eines Elektromagneten aufweisen.

Die Trageinrichtung kann auch alternativ elektrische Verbindungen zur Aufbringung elektrostatischer Aufladung der Fixierabschnitte besitzen, so dass eine Aufladung automatisch maschinell gesteuert erfolgen kann, wobei Sicherheiten für Bedienungspersonal leicht einzuhalten sind.

Die Erfindung wird im Folgenden anhand von Ausführungsbeispielen unter Bezugnahme auf die beiliegenden Figuren der Zeichnung näher erläutert.

Von den Figuren zeigen:
- Fig. 1: eine schematische Perspektivansicht eines versteiften Faserverbundbauteils;
- Fig. 2: eine schematische perspektivische Explosionsansicht eines der Erfindung nicht zugehörigen Versteifungselementes mit einem ersten Ausführungsbeispiel einer Fixiereinrichtung;
- Fig. 3a-b: schematische Querschnittansichten des der Erfindung nicht zugehörigen Versteifungselementes nach Fig. 2 mit Variationen der Fixiereinrichtung;
- Fig. 4: eine schematische Draufsicht des der Erfindung nicht zugehörigen Versteifungselementes nach Fig. 2 mit einer weiteren Variation der Fixiereinrichtung;
- Fig. 5: eine schematische perspektivische Explosionsansicht des Versteifungselementes nach Fig. 2 mit einem zweiten Ausführungsbeispiel einer Fixiereinrichtung;
- Fig. 6: eine schematische Querschnittansicht des Versteifungselementes nach Fig. 2 mit einer weiteren Variation der Fixiereinrichtung und einer Trageinrichtung; und
- Fig. 7: eine schematische Querschnittsansicht einer beispielhaften erfindungsgemäßen Anordnung zur Herstellung eines versteiften Faserverbundbauteils.

In den Figuren bezeichnen dieselben Bezugszeichen gleiche oder funktionsgleiche Komponenten, soweit nichts Gegenteiliges angegeben ist.

Fig. 1 ist bereits weiter oben beschrieben.

Zur Herstellung des in Fig. 1 gezeigten Beispiels eines mit Versteifungselementen 3, die hier Hutprofile aufweisen, verstärkten, integralen Faserverbundbauteils 1 einer Außenhaut aus Verbundwerkstoffen eines nicht gezeigten Luftfahrzeugs werden die Versteifungselemente 3 aus ausgehärteten Faserverbundwerkstoffen mit einem Hautlaminat (in Fig. 1 der Faserverbundbauteilabschnitt 2) aus nicht ausgehärtetem mit Harz vorimprägnierten Fasern (Prepreg) verklebt.

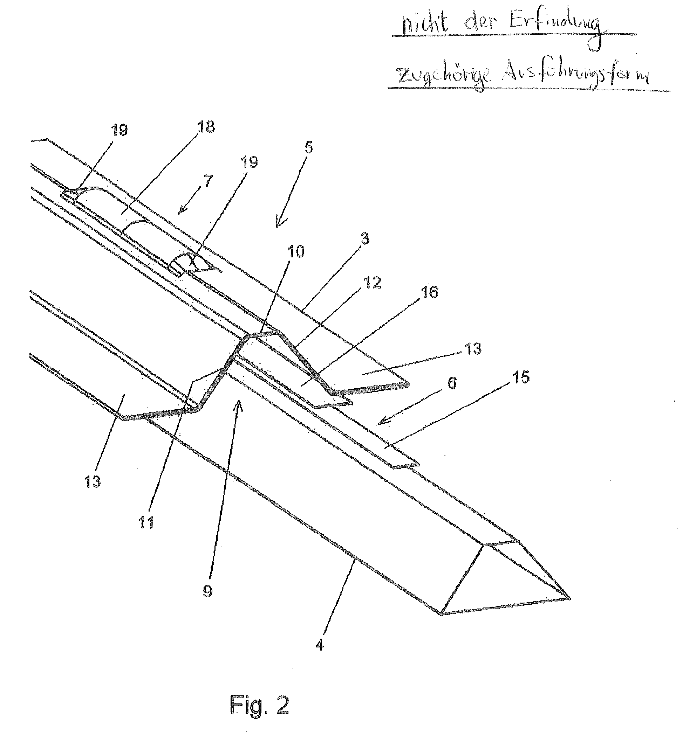

Zunächst werden die Versteifungselemente 3 mit Druckelementen 4 versehen. Dazu ist in Fig. 2 eine schematische perspektivische Explosionsansicht eines der Erfindung nicht zugehörigen Versteifungselementes 3 mit einem ersten Ausführungsbeispiel einer Fixiereinrichtung 5 dargestellt.

Ein Versteifungselement 3 zur Versteifung eines Faserverbundbauteils 1 (siehe Fig. 1) ist als Hohlprofil ausgeführt. Dabei weist das Versteifungselement 3 einen Aufnahmebereich 9 auf, der zwischen den Fußabschnitten 13 liegt und von Seitenwänden 11 und 12 und Deckwand 10 umgrenzt ist. Der Aufnahmebereich 9 besitzt hier einen trapezförmigen Querschnitt.

Ein Druckelement 4 ist in diesem Beispiel aus einem Schlauch mit einem Trapezquerschnitt gebildet, welcher der Innenkontur, d.h. dem Aufnahmebereich 9, des Versteifungselementes 3 angepasst ist.

Das Druckelement 4 und das Versteifungselement 3 werden zusammen über eine reversible Fixiereinrichtung 5 relativ zueinander fixiert. Diese reversible Fixiereinrichtung 5 weist einen ersten Fixierabschnitt 6 am Druckelement 4 und einen zweiten Fixierabschnitt 7 am Versteifungselement 3 auf.

Der erste Fixierabschnitt 6 der Fixiereinrichtung 5 ist in diesem ersten Ausführungsbeispiel der Fixiereinrichtung 5 ein Ferromagnetelement 15. Es ist auf derjenigen Fläche des Druckelementes 4 befestigt, welche zu der Innenfläche der Deckwand 10 des Versteifungselementes 3 korrespondiert. Die Befestigung des Ferromagnetelementes 15, welches zum Beispiel ein durchgehendes Band sein kann, erfolgt mit einem geeigneten Klebstoff und/oder Klebstreifen. Über dem Ferromagnetelement 15 ist ein Abdeckelement 16 in Gestalt einer Abdeckfolie angebracht, welche ein Entfernen des Druckelementes 4 nach dem Aushärten erleichtert und gleichzeitig auch einen Schutz des Ferromagnetelementes 15 gegenüber äußeren Einflüssen, wie zum Beispiel Materialien des Versteifungselementes 3, bildet. Das Abdeckelement 16 kann zum Beispiel ein antiadhäsiver Film sein, beispielsweise ein Fluorpolymer (PTFE, FEP, ETFE), wodurch zum Beispiel ein Verkleben durch Kontamination mit der Matrix (Epoxidharz) des Hautlaminats (siehe Fig. 1) verhindert wird.

Der zweite Fixierabschnitt 7 der Fixiereinrichtung 5 ist in diesem Beispiel ein Magnetelement 18, z.B. ein Permanentmagnet, der auf der Deckwand 10 des Versteifungselementes 3 angeordnet ist. Das Magnetelement 18 weist hier Anschrägungen 19 auf, um eine Zusammenwirkung mit einer Handhabungseinrichtung (wird weiter unten näher erläutert) zu erleichtern. Je nach Länge des Versteifungselementes 3 kann das Magnetelement 18 angepasst sein oder aus mehreren in Längsrichtung des Versteifungselementes 3 hintereinander angeordneten einzelnen Magnetelementen 18 bestehen. Diese einzelnen Magnetelementes 18 können zum Beispiel in einer passenden Leiste oder einer Umfassung angeordnet sein.

Das mit dem ersten Fixierabschnitt 6 versehene Druckelement 4 wird dann in den Aufnahmebereich 9 des Versteifungselementes 3 eingebracht und relativ zu dem Versteifungselement 3 positioniert, wobei eine Fixierung der gewünschten Position von Versteifungselement 3 und Druckelement 4 durch die Zusammenwirkung des ersten Fixierabschnitts 6 und des zweiten Fixierabschnitts 7 dergestalt erfolgt, dass der erste Fixierabschnitt 6 als magnetisierbares Ferromagnetelement 15 von dem zweiten Fixierabschnitt 7 als Magnetelement 18 bzw. Permanentmagnet angezogen wird. Dabei wird das mit dem ersten Fixierabschnitt 6 verbundene Druckelement 4 in dem Aufnahmebereich 9 des Versteifungselementes 3 mit angezogen und darin gehalten.

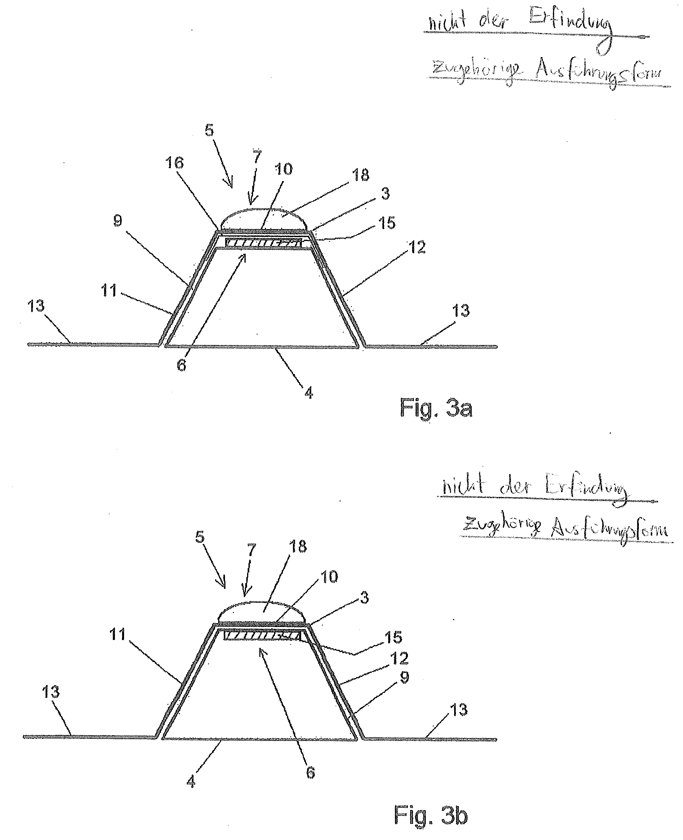

Fig. 3a und 3b zeigen schematische Querschnittansichten des der Erfindung nicht zugehörigen Versteifungselementes 3 nach Fig. 2 mit Variationen der Fixiereinrichtung 5. Das Druckelement 4 ist jeweils innerhalb des Aufnahmebereiches 9 des Versteifungselementes 3 eingebracht und wird von der Fixiereinrichtung 5 fixiert gehalten.

In Fig. 3a ist der erste Fixierabschnitt 6, nämlich das Ferromagnetelement 15, auf der oberen Außenfläche derjenigen Seite des Druckelementes 4 angebracht, welche zu der Innenfläche der Deckwand 10 des Versteifungselementes 3 korrespondiert. Das Abdeckelement 16 ist in dieser Variation über das Ferromagnetelement 15 hinweg angeordnet, wobei es an den Seitenflächen des Druckelementes 4 anliegt. Das Abdeckelement 16 ist hierbei als ein Trägerfilm wie bei Fig. 2 beschrieben ausgeführt, wobei seine zum Druckelement 4 weisende Seite mit einem Klebstoff beschichtet ist, welcher zum Einen mit dem Ferromagnetelement 15 und zum Anderen mit dem Druckelement 4 Klebverbindungen herstellt und somit das Ferromagnetelement 15 und Druckelement 4 zusammen verbindet.

Eine weitere Variation der Fixiereinrichtung 5 ist in Fig. 3b dargestellt. Hierbei befindet sich der erste Fixierabschnitt 6, nämlich das Ferromagnetelement 15, innerhalb des Druckelementes 4. Das Druckelement 4 kann zum Beispiel der oben angegebene Schlauch sein. Dabei wird eine Anbringung des ersten Fixierabschnitts 6 innerhalb des Druckelementes 4 zum Beispiel über Verkleben des ersten Fixierabschnitts 6 mit der Innenfläche derjenigen Seite des Druckelementes 4, welche zu der Innenfläche der Deckwand 10 des Versteifungselementes 3 korrespondiert und diese hier direkt formschlüssig kontaktiert. Da sich in diesem Beispiel der erste Fixierabschnitt 6 innerhalb des Druckelementes 4 befindet, ist es durch das Druckelement 4 selbst abgedeckt und gegen äußere Einflüsse geschützt. Bei diesem in Fig. 3b gezeigten Beispiel kann zum Beispiel wie folgt vorgegangen werden:
Das Versteifungselement 3 wird so angeordnet, dass der Aufnahmebereich 9 nach oben hin offen liegt. Dann kann das Druckelement 4 in diesen eingebracht werden. Nun erfolgt ein Einsetzen des ersten Fixierabschnitts 6 in den Innenraum des Druckelementes 4, wobei der erste Fixierabschnitt 6 durch die Schwerkraft auf der Innenfläche derjenigen Seite des Druckelementes 4 angeordnet wird, welche zu der Innenfläche der Deckwand 10 des Versteifungselementes 3 korrespondiert. Durch den dann angebrachten zweiten Fixierabschnitt 7 wird der erste Fixierabschnitt 6 wie oben beschrieben fixiert und das Druckelement 4 relativ zum Versteifungselement 3 in der vorher angeordneten gewünschten Position festgehalten. Eine Verbindung des ersten Fixierabschnitts 6 mit dem Druckelement 4 erfolgt somit kraftschlüssig über die Fixiereinrichtung 5, wobei zum Beispiel eine Verklebung entfallen kann.

Die Fig. 3a und 3b illustrieren für diese Beispiele (auch gemäß Fig. 2) eindeutig, dass der erste Fixierabschnitt 6 am Druckelement 4 und der zweite Fixierabschnitt 7 am Versteifungselement 3 angebracht sind, wobei zwischen dem ersten Fixierabschnitt 6 und dem zweiten Fixierabschnitt 7 das Versteifungselement 3 angeordnet ist. Der zweite Fixierabschnitt 7 ist hier auf der dem Druckelement 4 gegenüberliegenden Seite des Versteifungselementes 3 angeordnet. Die Fixiereinrichtung 5 bewirkt auf diese Weise eine kraftschlüssige Fixierung von Druckelement 4 und Versteifungselement 3, indem das Druckelement 4 und das Versteifungselement 3 gegeneinander gezogen werden.

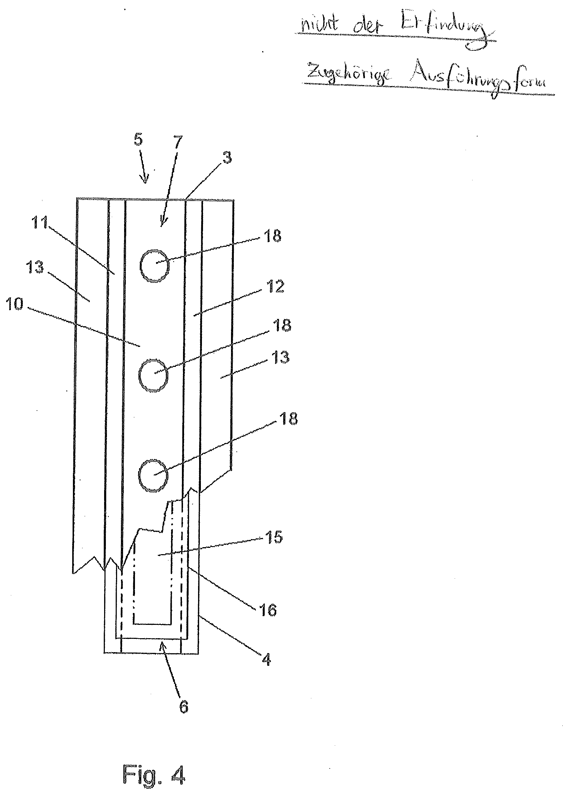

Fig. 4 zeigt eine schematische Draufsicht des Versteifungselementes 3 nach Fig. 2 mit einer weiteren Variation der Fixiereinrichtung 5. Hierbei ist der zweite Fixierabschnitt 7 mit mehreren Magnetelementen 18 (hier in Gestalt von kreisförmigen Magnetplättchen) ausgebildet, welche untereinander in Längsrichtung des Versteifungselementes 3 zum Beispiel aneinander gekettet sein können. Fig. 4 zeigt weiterhin das Abdeckelement 16, welches hier wie in Fig. 3a das Ferromagnetelement 15 überdeckt und als Klebfilm am Druckelement 4 befestigt ist.

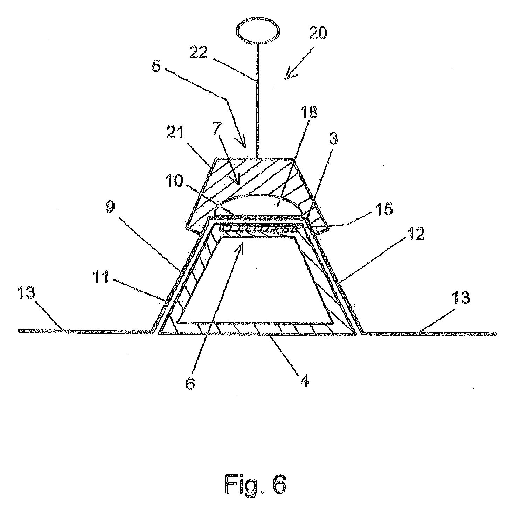

Die Fixiereinrichtung 5 ist reversibel ausgebildet. Das bedeutet für die bisher gezeigten Ausführungen, dass hierbei der zweite Fixierabschnitt 7, auch in größerer Anzahl, an dem Versteifungselement 3 reversibel anbringbar ist. Beispielsweise kann es mit einer geeigneten Handhabe verbunden sein, und ist somit anbringbar und entfernbar, wie weiter unten noch näher im Zusammenhang mit Fig. 6 erläutert wird.

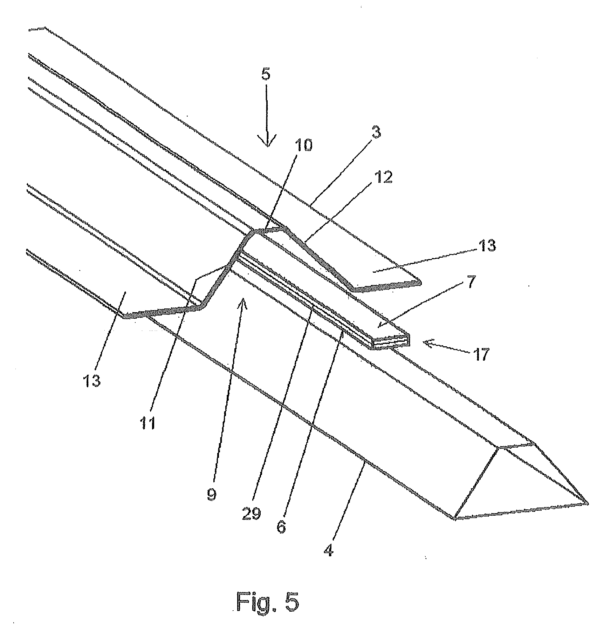

Ein zweites Ausführungsbeispiel einer reversiblen Fixiereinrichtung 5 stellt Fig. 5 in einer schematischen perspektivischen Explosionsansicht des Versteifungselementes 3 nach Fig. 2 dar. Hierbei sind das Druckelement 4 und das Versteifungselement 3 über eine Fixiereinrichtung 5 mit einem reversiblen Klebelement 17 verbunden. Dabei ist der erste Fixierabschnitt 6 am Druckelement 4 durch Verklebung anbringbar und der zweite Fixierabschnitt 7 ist am Versteifungselement 3 hier an der Innenfläche der Deckwand 10 ebenfalls durch Verklebung anbringbar. Die Klebschicht des zweiten Fixierabschnitts 7 ist so ausgebildet, dass sie sich nach Aushärtung des Faserverbundbauteils 1 besonders leicht trennen lässt. Dies kann auch durch Beaufschlagung mit bestimmten Prozessparametern erfolgen, wie beispielsweise unterschiedliche Temperatureinwirkungen, Fluide, chemische Stoffe u. dgl.

Das reversible Klebelement 17 weist in dem hier gezeigten Beispiel eine in ihm integrierte Einlageschicht 29 aus einem Werkstoff auf, der durch äußere Kräfte, wie zum Beispiel Magnetkräfte und/oder elektrostatische Kräfte, zur Unterstützung beim Entfernen des Klebbands 17 durch Abstoßung und/oder Anziehung beeinflussbar ist. Zum Beispiel kann ein von innerhalb des Druckelementes 4 eingebrachter Elektromagnet die Einlageschicht 29 von dem Versteifungselement 3 wegziehen. Aufbringen elektrostatischer Aufladungen gleichen oder unterschiedlicher Polung (oder Applikation einer entsprechenden Elektrode) auf Versteifungselement 3 und Einlageschicht 29 seien beispielhaft genannt.

Es ist auch denkbar, dass das reversible Klebelement 17 eine adhäsive und/oder kohäsive Verbindung ist, wobei sie flüssig oder filmartig (z.B. Klebband) ausgebildet ist. Das reversible Klebelement 17 kann auch einen thermoplastischen Heißkleber aufweisen, wobei dieser nach erfolgtem Aushärtevorgang beim Abkühlen bis auf eine bestimmte "Topftemperatur" noch weich bleibt, und somit ein leichtes Entfernen des Druckelementes 4 ermöglicht.

Fig. 6 illustriert eine schematische Querschnittansicht des Versteifungselementes 3 nach Fig. 2 mit einer weiteren Variation der Fixiereinrichtung 5 und einer Trageinrichtung 20.

In diesem Beispiel ist das Druckelement 4 so ausgebildet, dass der erste Fixierabschnitt 6 innerhalb der Wandung des Druckelementes 4 eingebracht ist, zum Beispiel eingesetzt und verklebt, umspritzt, verschweißt oder dergleichen. Der zweite Fixierabschnitt 7 ist als Magnetelement 18 in einem Tragkörper 21 einer Trageinrichtung 20 angeordnet, welche hier mit einem Tragelement 22 verbunden ist. Das Tragelement 22 kann zum Beispiel eine Seilschlaufe oder ein Stab mit einem Handgriff zur manuellen Handhabung sein. Wenn das Druckelement 4 im Aufnahmebereich 9 des Versteifungselementes 3 eingebracht und relativ zu dem Versteifungselement 3 positioniert ist, kann der zweite Fixierabschnitt 7 mit der Trageinrichtung 20, in diesem Beispiel außen, an dem Versteifungselement 3 angebracht werden. Dann ist das Versteifungselement 3 zusammen mit dem über die Fixiereinrichtung 5 relativ zu dem Versteifungselement 3 fixierten und gehaltenen Druckelement 4 transportierbar.

Die Trageinrichtung 20 kann mehrere Trageinrichtungen 20 verteilt über die Länge des Versteifungselementes 3 aufweisen. Auch ein Tragkörper 21 mit der gleichen Länge des Versteifungselementes 3 ist möglich. Hierzu kann die zugehörige Trageinrichtung 20 für ein oder mehrere Versteifungselemente 3 ausgebildet und für einen maschinellen Transport vorgesehen sein.

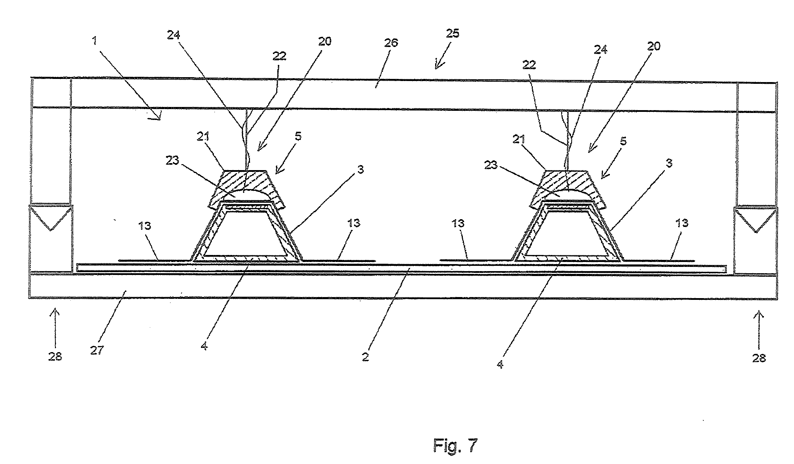

Ein Beispiel einer erfindungsgemäßen Anordnung 25 zur Herstellung eines versteiften Faserverbundbauteils 1 zeigt Fig. 7 in einer schematischen Querschnittsansicht.

Auf einer Grundplatte 27 ist das Hautlaminat in Gestalt des Faserverbundbauteilabschnitts 2 (siehe Fig. 1) aus vorimprägnierten Fasern aufgebracht. Zwei Versteifungselemente 3 mit jeweils durch eine reversible Fixiereinrichtung 5 gehaltenen Druckelementen 4 sind hier beispielhaft jeweils über eine Trageinrichtungen 20 wie unter Fig. 6 beschrieben an einer Transporteinrichtung 25 gehalten auf den Faserverbundbauteilabschnitt 2 positioniert und aufgebracht. Zuvor wurden die Unterseiten der Fußabschnitte 13 durch Aufbringen von Epoxid-Klebefilm vorbereitet.

Die auf den Faserverbundbauteilabschnitt 2 aufgebrachten und positionierten Versteifungselemente 3 bilden mit ihren Seitenwänden 11 und 12, der Deckwand 10 und dem von diesen überdeckten Abschnitt des Hautlaminats einen Innenraum, in welchem das Druckelement 4 angeordnet ist. Das Druckelement 4 ist in diesem Zustand sowohl von den Innenflächen der Wände 10, 11 und 12 des Versteifungselementes 3 als auch von der darunter liegenden Fläche des Faserverbundbauteilabschnitt 2 umgeben.

In den Tragkörpern 21 sind die zweiten Fixierabschnitte 7 als Elektromagneten 23 ausgebildet und jeweils über eine Leitung 24 mit elektrischer Energie zur Magnetisierung beaufschlagbar.

Die Anordnung 25 kann zum Beispiel modular aufgebaut sein, so dass sie leicht an Faserverbundbauteile 1 mit unterschiedlichen Abmessungen anpassbar ist.

Die die Trageinrichtungen 20 ergreifen die mit den Druckelementen 4 versehenen Versteifungselemente 3, indem die Tragkörper 21 an den Außenseiten der Deckwände 10 der Versteifungselemente 3 angebracht werden. Dann werden die Elektromagnete 23 bestromt und bilden mit den ersten Fixierabschnitten 6 der Druckelemente 4 reversible Fixiereinrichtungen. Die so relativ zueinander fixierten Versteifungselemente 3 und Druckelemente 4 werden auf die hier in Fig. 7 dargestellte Grundplatte 27 transportiert und auf ihr positioniert und aufgebracht. Dies kann auf unterschiedliche Weise je nach Gegebenheit erfolgen, zum Beispiel mittels einer Kraneinrichtung oder mit einem Schienensystem.

Zur reproduzierbaren Positionierung besitzen hier die Grundplatte 27 und Transporteinrichtung 26 am Rand dieser Bauteilvorrichtung Zentriermittel 28, zum Beispiel Zentrierstifte an der Transporteinrichtung 26 und korrespondierende Aufnahmen an der Grundplatte 27.

Sind die Versteifungselemente 3 mit den Druckelementen 4 auf der Grundplatte 27 durch die Transporteinrichtung 26 zentriert, positioniert und abgelegt, so wird die Bestromung der Elektromagneten 23 unterbrochen, wobei die zweiten Fixierabschnitte 7 in Gestalt der Elektromagneten 23 durch die Transporteinrichtung 26 entfernt werden können. Die zuvor durchgeführte Positionierung zwischen Druckelementen 4 und Versteifungselementen 3 bleibt jedoch bestehen.

Das Faserverbundbauteil 1 kann nun mit den Versteifungselementen 3 und darin angeordneten Druckelementen 4, die mit entsprechendem Druck beaufschlagt werden, in bekannter Weise zum Härten vorbereitet und gehärtet werden. Danach werden die Druckelemente 4 nach Entfernen der Druckbeaufschlagung aus den Versteifungselementen 3 herausgezogen.

Die Anordnung 25 kann eine Steuereinrichtung aufweisen, welche mit den Zentriermitteln 28, Antriebsmitteln zum Verfahren der Transportvorrichtung 25, Antriebsmitteln für Trageinrichtungen 20, Bestromungsmitteln für die Elektromagneten 23 und weiteren Melde- und Sensoreinrichtungen verbunden ist. Dadurch wird die Herstellung des versteiften Faserverbundbauteils 1 so automatisiert, dass eine hohe Reproduzierbarkeit bei geringster Fehlerwahrscheinlichkeit erzielt wird, wobei die Druckelemente 4 und die Trageinrichtungen 20, und somit auch die reversiblen Fixiereinrichtungen 5 wieder verwendbar sind.

Obwohl die vorliegende Erfindung anhand bevorzugter Ausführungsbeispiele vorliegend beschrieben wurde, ist sie darauf nicht beschränkt, sondern auf vielfältige Weise modifizierbar.

Beispielsweise können nicht nur Ω-Stringer sondern auch Versteifungselemente mit anderen Hohlprofilquerschnitten, wie zum Beispiel drei, vier oder vieleckig mit der Erfindung be- und verarbeitet werden.

Die Fixiereinrichtung 5 kann auch erste und zweite Fixierabschnitte 6, 7 an den anderen Seitenflächen des Druckelementes 4 und den korrespondierenden Flächen des Versteifungselementes 3 aufweisen.

Es ist auch denkbar, dass die Fixiereinrichtung 5 eine Einrichtung zur Aufbringung statischer Elektrizität auf entsprechende elektrostatisch aufladbare Fixierabschnitte 6, 7 aufweist. Hierbei können das Druckelement 4 und Versteifungselement 3 selbst die Fixierabschnitte 6, 7 bilden. Dies ist zum Beispiel dann möglich, wenn Fixierabschnitte 6, 7 oder Druckelement 4 und Versteifungselement 3 aus Kunststoff oder anderen elektrostatisch aufladbaren Materialien bestehen.

Es ist auch möglich, dass der erste Fixierabschnitt 6 im Druckelement 4 ein Elektromagnet ist.

Das Versteifungselement 3 kann auch teilgehärtet sein.

Ein Verfahren zur Versteifung eines Faserverbundbauteils 1 für die Luft- und Raumfahrt weist folgende Verfahrensschritte auf:
Ein Versteifungselement 3 mit einem Aufnahmebereich 9 und ein an die Geometrie des Aufnahmebereichs 9 angepasstes Druckelement 4 werden bereitgestellt. Das Druckelement 4 wird in den Aufnahmebereich 9 des Versteifungselementes 3 eingebracht. Dabei erfolgt ein reproduzierbares Fixieren des Versteifungselementes 3 und des eingebrachten Druckelementes 4 relativ zueinander mittels einer reversiblen Fixiereinrichtung 5. Die reversible Fixiereinrichtung 5 weist mindestens einen an dem Druckelement 4 angebrachten ersten Fixierabschnitt 6 und mindestens einen an dem Versteifungselement 3 angebrachten zweiten Fixierabschnitt 7 auf. Das Versteifungselement 3 wird dann zusammen mit dem an ihm fixierten Druckelement 4 auf dem zu versteifenden Faserverbundbauteil 1 zum Bilden eines Formabschnitts 8 reproduzierbar aufgebracht. Der so gebildete Formabschnitt 8 wird zum Anbinden des Versteifungselementes 3 an dem Faserverbundbauteil 1 ausgehärtet. Dann erfolgt ein Entfernen der reversiblen Fixiereinrichtung 5 und des Druckelementes 4 von dem versteiften Faserverbundbauteil 1.

In einer beispielhaften Ausführungsform des Verfahrens werden der erste Fixierabschnitt 6 durch das Druckelement 4 und der zweite Fixierabschnitt 7 durch das Versteifungselement 3 gebildet.

In einer beispielhaften Ausführungsform der Anordnung 25 ist die reversible Fixiereinrichtung 5 zur elektrostatischen Aufladung der Fixierabschnitte 6, 7 ausgebildet, wobei die Fixierabschnitte 6, 7 als separate Bauteile oder jeweils durch das Versteifungselement 3 und das Druckelement 4 ausgebildet sind.

### Bezugszeichenliste

- 1: Faserverbundbauteil
- 2: Faserverbundbauteilabschnitt
- 3: Versteifungselement
- 4: Druckelement
- 5: Fixiereinrichtung
- 6: Erster Fixierabschnitt
- 7: Zweiter Fixierabschnitt
- 8: Formabschnitt
- 9: Aufnahmebereich
- 10: Deckwand
- 11: Erste Seitenwand
- 12: Zweite Seitenwand
- 13: Fußabschnitt
- 14: Bodenabschnitt
- 15: Ferromagnetelement
- 16: Abdeckelement
- 17: Klebelement
- 18: Magnetelement
- 19: Anschrägung
- 20: Trageinrichtung
- 21: Tragkörper
- 22: Tragelement
- 23: Elektromagnet
- 24: Leitung
- 25: Anordnung
- 26: Transporteinrichtung
- 27: Grundplatte
- 28: Zentriermittel
- 29: Einlageschicht

## Patentansprüche

1. Verfahren zur Versteifung eines Faserverbundbauteils (1) für die Luft- und Raumfahrt, mit folgenden Verfahrensschritten:
Bereitstellen eines Versteifungselementes (3) mit einem Aufnahmebereich (9) und eines an die Geometrie des Aufnahmebereichs (9) angepassten Druckelementes (4);
Einbringen des Druckelementes (4) in den Aufnahmebereich (9) des Versteifungselementes (3);
reproduzierbares Fixieren des Versteifungselementes (3) und des eingebrachten Druckelementes (4) relativ zueinander mittels einer reversiblen Fixiereinrichtung (5), wobei die reversible Fixiereinrichtung (5) mindestens einen an dem Druckelement (4) angebrachten ersten Fixierabschnitt (6) und mindestens einen an dem Versteifungselement (3) anbringbaren zweiten Fixierabschnitt (7) aufweist, wobei das reproduzierbare Fixieren des Versteifungselementes (3) und des eingebrachten Druckelementes (4) relativ zueinander mittels eines reversiblen Klebelementes (17) erfolgt, welches zwischen dem Druckelement (4) und dem Versteifungselement (3) angebracht wird, wobei das Klebeelement (17) eine zwischen dem ersten Fixierabschnitt (6) und dem zweiten Fixierabschnitt (7) des Klebeelements (17) angeordnete Einlageschicht (29) aufweist, welche zur Unterstützung einer Entfernung des Klebeelements (17) ausgebildet ist;
reproduzierbares Aufbringen des Versteifungselementes (3) zusammen mit dem an ihm fixierten Druckelement (4) auf dem zu versteifenden Faserverbundbauteil (1) zum Bilden eines Formabschnitts (8);
Aushärten des gebildeten Formabschnitts (8) zum Anbinden des Versteifungselementes (3) an dem Faserverbundbauteil (1); und
Entfernen der reversiblen Fixiereinrichtung (5) und des Druckelementes (4) von dem versteiften Faserverbundbauteil (1).

2. Verfahren nach Anspruch 1,
**dadurch gekennzeichnet,**
**dass** nach dem Aufbringen des Versteifungselementes (3) zumindest der zweite Fixierabschnitt (7) der reversiblen Fixiereinrichtung (5) vor dem Aushärten des gebildeten Formabschnitts (8) entfernt wird.

3. Verfahren nach Anspruch 1 oder 2,
**dadurch gekennzeichnet,**
**dass** der zweite Fixierabschnitt (7) der reversiblen Fixiereinrichtung (5) an der Außenseite des Versteifungselementes (3) angebracht wird, wobei das Versteifungselement (3) zwischen dem ersten Fixierabschnitt (6) und dem zweiten Fixierabschnitt (7) der reversiblen Fixiereinrichtung (5) angeordnet wird.

4. Anordnung (25) zur Herstellung eines versteiften Faserverbundbauteils (1) für die Luft- und Raumfahrt, mit:
einem einen Aufnahmebereich (9) aufweisenden
Versteifungselement (3);
einem an die Geometrie des Aufnahmebereichs (9) angepassten Druckelement (4) zum Einbringen des Druckelementes (4) in den Aufnahmebereich (9);
einer reversiblen Fixiereinrichtung (5) zum reproduzierbaren Fixieren des Versteifungselementes (3) und des eingebrachten Druckelementes (4) relativ zueinander, wobei die reversible Fixiereinrichtung (5) mindestens einen an dem Druckelement (4) angebrachten ersten Fixierabschnitt (6) und mindestens einen an dem Versteifungselement (3) anbringbaren zweiten Fixierabschnitt (7) aufweist, wobei die reversible Fixiereinrichtung (5) mit einem reversiblen Klebelement (17), welches zwischen dem Druckelement (4) und dem Versteifungselement (3) angebracht ist, ausgebildet ist, wobei das Klebeelement (17) eine zwischen dem ersten Fixierabschnitt (6) und dem zweiten Fixierabschnitt (7) des Klebeelements (17) angeordnete Einlageschicht (29) aufweist, welche zur Unterstützung einer Entfernung des Klebeelements (17) ausgebildet ist;
einer Transporteinrichtung (26), welche eine Trageinrichtung (20) zur Aufnahme des Versteifungselementes (3) und des im Aufnahmebereich (9) des Versteifungselementes (3) eingebrachten Druckelementes (4) aufweist, zum reproduzierbaren Aufbringen des Versteifungselementes (3) zusammen mit dem an ihm fixierten Druckelement (4) auf dem zu versteifenden Faserverbundbauteil (1) zum Bilden eines Formabschnitts (8);
einer Aushärteinrichtung zum Aushärten des gebildeten Formabschnitts (8) zum Anbinden des Versteifungselementes (3) an dem Faserverbundbauteil (1); und
einer Entfernungseinrichtung zum Entfernen der reversiblen Fixiereinrichtung (5) und des Druckelementes (4) von dem versteiften Faserverbundbauteil (1).

5. Anordnung (25) nach Anspruch 4,
**dadurch gekennzeichnet,**
**dass** die Trageinrichtung (20) den zweiten Fixierabschnitt (7) aufweist.

## Claims

1. Method for stiffening a fibre composite component (1) for the aviation and aerospace industry, comprising the following method steps:
- providing a stiffening element (3) comprising a receiving region (9) and a pressure element (4) adapted to the geometry of the receiving region (9);
- introducing the pressure element (4) into the receiving region (9) of the stiffening element (3);
- fastening the stiffening element (3) and the inserted pressure element (4) relative to one another in a reproducible manner by means of a reversible fastening device (5), wherein the reversible fastening device (5) comprises at least a first fastening portion (6) mounted on the pressure element (4) and at least a second fastening portion (7) which can be mounted on the stiffening element (3), wherein the stiffening element (3) and the introduced pressure element (4) are fastened in a reproducible manner relative to one another by means of a reversible adhesive element (17) which is mounted between the pressure element (4) and the stiffening element (3), wherein the adhesive element (17) comprises an insert layer (29) arranged between the first fastening portion (6) and the second fastening portion (7) of the adhesive element (17), said insert layer being designed to assist removal of the adhesive element (17);
- applying the stiffening element (3), together with the pressure element (4) fastened thereto, in a reproducible manner to the fibre composite component (1) to be stiffened, to form a moulded portion (8);
- curing the formed moulded portion (8) to connect the stiffening element (3) to the fibre composite component (1); and
- removing the reversible fastening device (5) and the pressure element (4) from the stiffened fibre composite component (1).

2. Method as claimed in claim 1,
**characterised in that**
after the application of the stiffening element (3) at least the second fastening portion (7) of the reversible fastening device (5) is removed before the formed moulded portion (8) is cured.

3. Method as claimed in claim 1 or 2,
**characterised in that**
the second fastening portion (7) of the reversible fastening device (5) is mounted on the outside of the stiffening element (3), wherein the stiffening element (3) is arranged between the first fastening portion (6) and the second fastening portion (7) of the reversible fastening device (5).

4. Arrangement (25) for producing a stiffened fibre composite component (1) for the aviation and aerospace industry, comprising:
a stiffening element (3) comprising a receiving region (9);
a pressure element (4) adapted to the geometry of the receiving region (9) for introducing the pressure element (4) into the receiving region (9);
a reversible fastening device (5) for fastening the stiffening element (3) and the introduced pressure element (4) relative to one another in a reproducible manner, wherein the reversible fastening device (5) comprises at least a first fastening portion (6) mounted on the pressure element (4) and at least a second fastening portion (7) which can be mounted on the stiffening element (3), wherein the reversible fastening device (5) is formed with a reversible adhesive element (17) which is mounted between the pressure element (4) and the stiffening element (3), wherein the adhesive element (17) comprises an insert layer (29) which is arranged between the first fastening portion (6) and the second fastening portion (7) of the adhesive element (17) and which is designed to assist removal of the adhesive element (17);
a transport device (26) which comprises a support device (20) for receiving the stiffening element (3) and the pressure element (4) introduced in the receiving region (9) of the stiffening element (3), for applying the stiffening element (3), together with the pressure element (4) fastened thereto, in a reproducible manner to the fibre composite component (1) to be stiffened, to form a moulded portion (8) ;
a curing device for curing the formed moulded portion (8) for connecting the stiffening element (3) to the fibre composite component (1); and
a removal device for removing the reversible fastening device (5) and the pressure element (4) from the stiffened fibre composite component (1).

5. Arrangement (25) as claimed in claim 4,
**characterised in that**
the support device (20) comprises the second fastening portion (7).

## Revendications

1. Procédé de renforcement d'un composant composite à fibres (1) pour l'aéronautique et l'aérospatiale, comprenant les étapes de procédé suivantes :
- fourniture d'un élément de renforcement (3) comprenant une zone de logement (9) et un élément de pression (4) adapté à la géométrie de la zone de logement (9) ;
- insertion de l'élément de pression (4) dans la zone de logement (9) de l'élément de renforcement (3) ;
- fixation reproductible de l'élément de renforcement (3) et de l'élément de pression inséré (4) de manière relative l'un par rapport à l'autre au moyen d'un dispositif de fixation réversible (5), dans lequel procédé le dispositif de fixation réversible (5) présente au moins une première section de fixation (6) pouvant être appliquée sur l'élément de pression (4) et au moins une deuxième section de fixation (7) pouvant être appliquée sur l'élément de renforcement (3), dans lequel procédé
la fixation reproductible de l'élément de renforcement (3) et de l'élément de pression inséré (4) l'un par rapport à l'autre est réalisée au moyen d'un élément adhésif réversible (17), lequel est appliqué entre l'élément de pression (4) et l'élément de renforcement (3), dans lequel procédé l'élément adhésif (17) présente une couche intercalaire (29) disposée entre la première section de fixation (6) et la deuxième section de fixation (7) de l'élément adhésif (17), laquelle couche intercalaire est réalisée pour soutenir un éloignement de l'élément adhésif (17) ;
- application reproductible de l'élément de renforcement (3), avec l'élément de pression (4) fixé sur lui, sur le composant composite à fibres à renforcer, dans le but de former une section façonnée (8) ;
- durcissement de la section façonnée (8) pour relier l'élément de renforcement (3) au composant composite à fibres (1) ; et
- retrait du dispositif de fixation réversible (5) et de l'élément de pression (4) pour les séparer du composant composite à fibres (1) renforcé.

2. Procédé selon la revendication 1,
**caractérisé en ce**
**qu'**après l'application de l'élément de renforcement (3), au moins la deuxième section de fixation (7) du dispositif de fixation réversible (5) est retirée avant le durcissement de la section façonnée (8).

3. Procédé selon la revendication 1 ou 2,
**caractérisé en ce que**
la deuxième section de fixation (7) du dispositif de fixation réversible (5) est appliquée sur le côté extérieur de l'élément de renforcement (3), dans lequel procédé l'élément de renforcement (3) est disposé entre la première section de fixation (6) et la deuxième section de fixation (7) du dispositif de fixation réversible (5).

4. Agencement (25) destiné à la fabrication d'un composant composite à fibres (1) pour l'aéronautique et l'aérospatiale, comprenant :
un élément de renforcement (3) présentant une zone de logement (9) ;
un élément de pression (4) adapté à la géométrie de la zone de logement (9) pour insérer l'élément de pression (4) dans la zone de logement (9) ;
un dispositif de fixation réversible (5) pour la fixation reproductible de l'élément de renforcement (3) et de l'élément de pression inséré (4) de manière relative l'un par rapport à l'autre, dans lequel agencement le dispositif de fixation réversible (5) présente au moins une première section de fixation (6) appliquée sur l'élément de pression (4) et au moins une deuxième section de fixation (7) pouvant être appliquée sur l'élément de renforcement (3), dans lequel agencement le dispositif de fixation réversible (5) est réalisé avec un élément adhésif réversible (17), lequel est appliqué entre l'élément de pression (4) et l'élément de renforcement (3), dans lequel agencement l'élément adhésif (17) présente une couche intercalaire (29) disposée entre la première section de fixation (6) et la deuxième section de fixation (7) de l'élément adhésif (17), laquelle couche intercalaire est réalisée pour soutenir un éloignement de l'élément adhésif (17) ;
un dispositif de transport (26), lequel présente un dispositif porteur (20) pour le logement de l'élément de renforcement (3) et de l'élément de pression (4) inséré dans la zone de logement (9) de l'élément de renforcement (3), permettant l'application reproductible de l'élément de renforcement (3), avec l'élément de pression (4) fixé sur lui, sur le composant composite à fibres à renforcer, dans le but de former une section façonnée (8) ;
un dispositif de durcissement destiné à durcir la section façonnée (8) pour relier l'élément de renforcement (3) au composant composite à fibres (1) ; et
un dispositif de retrait destiné à retirer le dispositif de fixation réversible (5) et l'élément de pression (4) pour les séparer du composant composite à fibres (1) renforcé.

5. Agencement (25) selon la revendication 4,
**caractérisé en ce que**
le dispositif porteur (20) présente la deuxième section de fixation (7).
